# DEMANDE DE BREVET EUROPEEN

(11) **EP 0 822 674 A1**
(43) Date de publication de la demande: **04.02.1998**
(21) Numéro de dépôt: 97401857.4
(22) Date de dépôt: 01.08.1997
(51) Int. Cl.: H04B 7/26, H04J 3/06

(54) **Système de communication à canal unique et émetteur pour un tel système**

(30) Priorité: 01.08.1996 FR 9609706
(71) Demandeur: SAGEM SA, 75116 Paris (FR)
(72) Inventeur: Zibell, Laurent, 75015 Paris (FR)
(74) Mandataire: Bloch, Gérard

(57) **Abrégé**

Le système de communication à établissement d'appels sur un canal de transmission unique (5) comporte une pluralité d'émetteurs (1 à 4) ayant des moyens d'émission respectifs (17) pour émettre dans le canal (5) et des moyens radio (11-15), de réception d'informations émises par des moyens de diffusion, comme le GPS, agencés pour synchroniser sur celles-ci les moyens d'émission respectifs (17).

## Description

Le problème à l'origine de la présente invention était d'établir des liaisons radio entre une flotte d'autobus et un centre de contrôle, tout en économisant les ressources radio nécessaires.

Naturellement, ce problème ne doit pas limiter la portée de la présente demande.

De façon classique, le centre de contrôle appelait successivement et cycliquement chacun des autobus sur un canal radio partagé en temps, afin de recevoir en retour leurs positions, sous forme de données, et ainsi de gérer le réseau de transport en commun, en télécommandant par exemple des panneaux d'affichage indiquant, aux divers arrêts d'autobus, le temps d'attente prévu.

Le canal radio était ainsi exploité selon des trames temporelles successives comportant des intervalles de temps synchronisés, et plus précisément décalés, respectivement réservés aux divers autobus.

Pour les transmissions d'informations exceptionnelles, telles qu'agressions ou changement imprévu de trajet, pouvant présenter un caractère d'urgence, les conducteurs d'autobus pouvaient émettre de façon asynchrone, c'est-à-dire non coordonnée entre autobus, sur un canal radiophonique réservé à cet effet. Les collisions d'appels éventuelles étaient réglées par exemple par réitération d'appel avec un retard aléatoire.

Une telle exploitation des ressources radio était d'une efficacité très limitée. En effet, chaque autobus, appelé explicitement dans son intervalle de temps de la trame, au moyen d'un numéro d'identité, répondait dans celui-ci en réémettant cette identité, précédée d'un en-tête de quelques octets de bits de synchronisation formant un motif temporel présentant des transitions, 0-1 ou 1-0, permettant la synchronisation du récepteur de données de la station de contrôle. Toutes ces données, de synchronisation et d'identité, représentant en pratique un volume bien plus important que les données de position qu'elles précédaient, les ressources, ou spectre, radio étaient ainsi gaspillées.

La situation était encore aggravée par le fait que, dans le cas d'un réseau radio cellulaire, on ne peut, sans risque d'interférences, réutiliser les mêmes fréquences dans deux cellules voisines.

La présente invention vise donc à une utilisation plus rationnelle des ressources nécessaires à la transmission dans un canal unique, radio ou autre.

A cet effet, l'invention concerne tout d'abord un système de communication à établissement d'appels sur un canal de transmission unique, comportant une pluralité d'émetteurs ayant des moyens d'émission respectifs agencés pour émettre dans le canal, caractérisé par le fait que les émetteurs comportent des moyens radio, de réception d'informations émises par des moyens de diffusion, agencés pour synchroniser sur celles-ci les moyens d'émission respectifs.

Ainsi, la synchronisation des émetteurs, qui était fournie de façon explicite dans le canal unique par un émetteur-récepteur gestionnaire, est, dans l'invention, fournie par les moyens de diffusion, sans intervention de gestionnaire, les émetteurs étant ainsi autonomes et les ressources de transmission étant alors ménagées.

On remarquera que les informations diffusées sont utilisées en tant que telles, sans la moindre notion de temps.

Les émetteurs disposent ainsi d'une base de temps commune et peuvent alors synchroniser leurs émissions de façon telle qu'un récepteur puisse identifier et détecter chaque émission, sans interférence.

L'invention est applicable à tout type de médium de transmission, par exemple les transmissions radio évoquées ci-dessus ou encore des transmissions sur câble électrique ou optique.

Dans une forme avantageuse de réalisation, les moyens radio de synchronisation sont agencés pour retarder, par rapport à l'instant de réception des informations, l'émission des moyens d'émission associés, selon un retard particulier à chaque émetteur.

On peut ainsi définir une trame temporelle synchronisée par les moyens de diffusion, dont les divers intervalles de temps sont réservés aux divers émetteurs en les identifiant donc implicitement, sans nécessité d'une transmission correspondante.

Dans une autre forme avantageuse de réalisation, chaque émetteur comporte en outre des moyens de codage et de modulation de données élémentaires, à émettre, par un mot de code d'identification, les moyens radio de synchronisation des émetteurs étant agencés pour synchroniser entre elles des émissions de données élémentaires, provenant des moyens de modulation des émetteurs.

Les émetteurs peuvent en particulier émettre simultanément leur mot de code d'identification et le destinataire, centre de contrôle dans le cas d'une flotte d'autobus, extrait chaque mot de code modulé du signal composite qu'il détecte, afin d'identifier chaque émetteur et de restituer les données d'information correspondantes. L'accès au canal est ainsi immédiat et, en outre, les émissions peuvent être à flux continu, même en cas d'absence de données à transmettre, ce qui maintient la synchronisation du destinataire sur chaque émetteur et évite ainsi la nécessité d'un en-tête de synchronisation.

L'invention concerne également un émetteur comportant des moyens d'émission agencés pour émettre dans le canal de transmission unique d'un système de communication, caractérisé par le fait qu'il comporte des moyens radio, de réception d'informations émises par des moyens de diffusion, agencés pour synchroniser sur celles-ci les moyens d'émission.

Un tel émetteur, produit intermédiaire du système de communication de l'invention, et le système sont manifestement liés par un concept inventif unique.

L'invention sera mieux comprise à l'aide de la description suivante d'un exemple de deux variantes de réalisation préférées du système de communication de l'invention en référence au dessin annexé, sur lequel:
- la figure 1 est une représentation schématique d'un tel système, pour des liaisons radio,
- la figure 2 est une représentation par blocs d'un émetteur de la première variante,
- la figure 3 représente deux trames temporelles de l'émetteur de la figure 2, et
- la figure 4 est une représentation schématique par blocs d'un émetteur de la seconde variante.

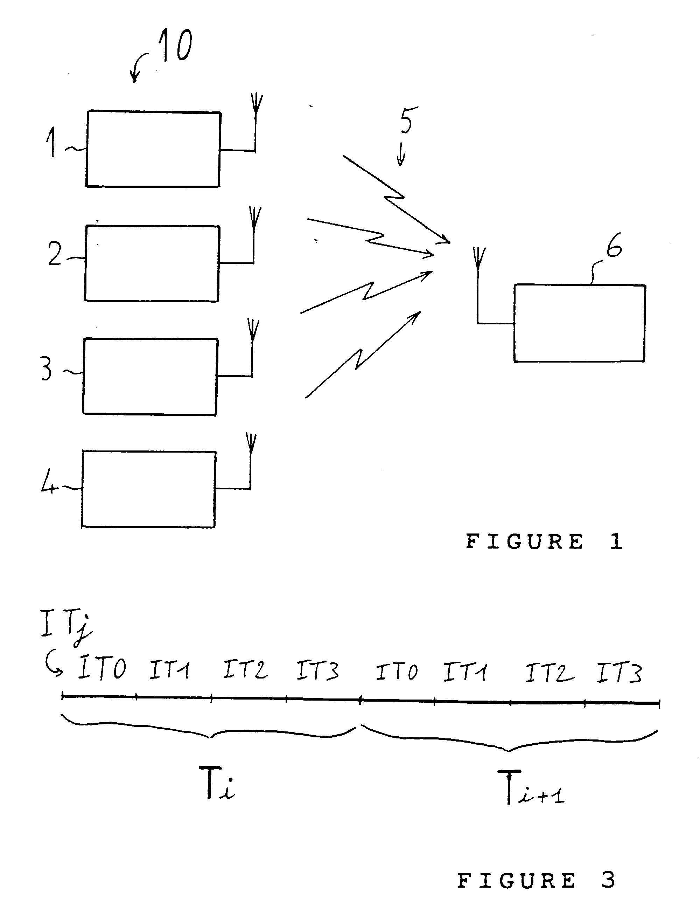

Le système de la figure 1 comporte une pluralité 10 d'émetteurs, ici quatre émetteurs référencés 1, 2, 3, 4, agencés pour émettre dans un canal de communication unique 5, radio dans cet exemple. Il n'est ici prévu qu'un seul récepteur 6, celui-ci étant dans cet exemple distinct des émetteurs 10.

Les émetteurs 1 à 4 sont identiques d'un point de vue matériel et ne diffèrent que par des données d'identité propres à chacun.

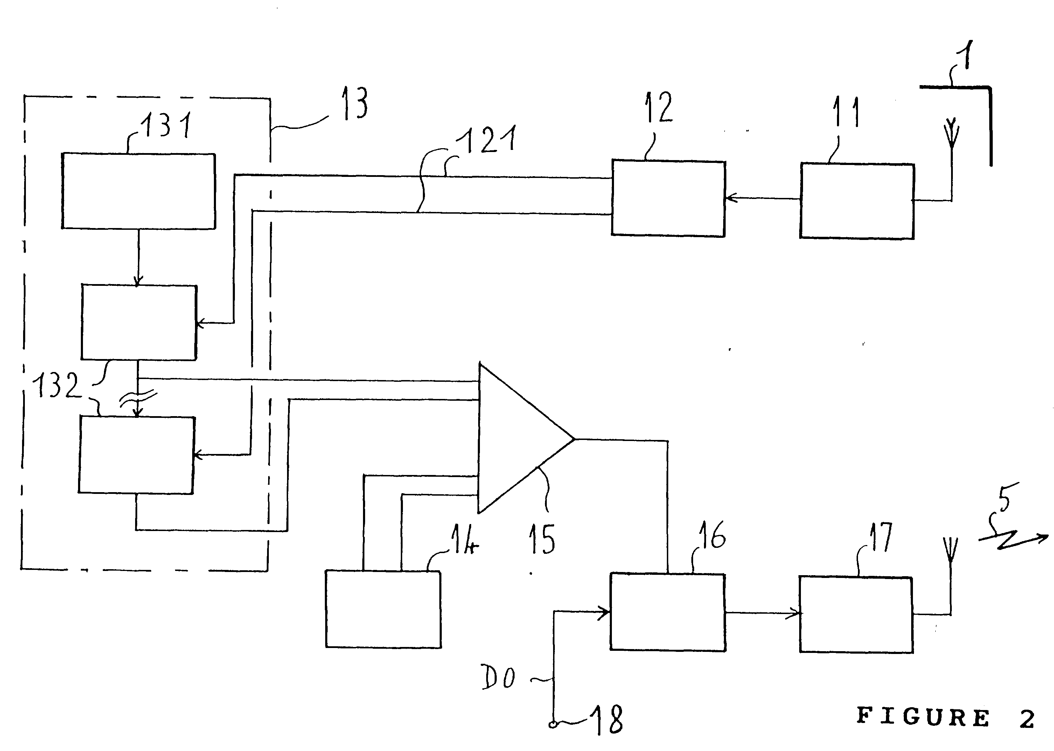

L'émetteur 1 de la figure 2 comporte un ensemble 11 à 15 de circuits de synchronisation commandant des circuits 16, 17 d'émission de données dans le canal 5.

Le circuit 11 est un récepteur radio réglé pour recevoir des informations diffusées prédéterminées. Dans cet exemple, il s'agit d'informations de temps fournies cycliquement par le système de satellites GPS (Global Positioning System).

Ces informations de temps sont fournies par le récepteur 11 à un circuit 12 de reconnaissance et mise en forme qui commande un circuit base de temps 13 comportant, de façon classique, un oscillateur 131 et une chaîne de compteurs diviseurs de fréquence 132. Par souci de clarté dans l'exposé, chacun des deux compteurs 132 représentés n'a ici qu'un étage. Les sorties des compteurs 132 sont appliquées à une entrée multiple d'un comparateur 15 recevant sur son autre entrée un nombre, mémorisé dans un registre 14, représentant l'identité de l'émetteur 1 c'est-à-dire son code d'identification. La sortie du comparateur 15 commande un circuit adaptateur-séquenceur 16 recevant des données DO à émettre, appliquées à une borne 18, et transmettant celles-ci, à la vitesse et selon le codage voulu, à un circuit d'émission radio 17 calé sur la fréquence du canal 5.

Le fonctionnement de l'émetteur 1 et, par là-même, celui du système que forment les émetteurs 1 à 4, va maintenant être expliqué.

Les bases de temps comme 13 des divers émetteurs 1 à 4 sont asservies sur les informations de temps diffusées par le système GPS. Pour cela, le circuit 12 transforme chaque information reçue à un instant donné en un nombre binaire compatible avec les compteurs 132 de la base de temps 13. Plus précisément, les compteurs/diviseurs 132 de celle-ci étant constitués d'une cascade d'étages diviseurs par 2 fournissant chacun une fréquence déterminée, les informations de temps GPS sont transformées, avec un retard négligeable ou tout au moins fixe, en un nombre binaire ayant le même format que la cascade de diviseurs 132. Chaque étage diviseur par 2, des compteurs 132 ci-dessus comporte, de façon classique, une entrée de division reliée à la sortie de l'étage amont correspondant. Il est en outre prévu, dans chaque étage diviseur, une entrée de forçage (preset) reliée (121) à une sortie correspondante du circuit 12, permettant d'afficher dans la base de temps 13 les informations de temps GPS et ainsi d'asservir la base de temps 13 sur celles-ci. Les entrées de forçage sont ici de type synchrone, c'est-à-dire qu'elles comportent chacune une porte, non représentée, contrôlée par le signal d'horloge de l'oscillateur 131. Ainsi, la base de temps 13, qui présente une succession d'états (nombres fournis par les compteurs 132) de durée individuelle fixe égale à la période de l'horloge de l'oscillateur 131, maintient cette durée inchangée en cas de saut, par forçage (121), entre deux états non successifs naturellement.

Selon la dérive de l'oscillateur 131 entre deux recalages de synchronisation, le saut ci-dessus peut faire passer le nombre fourni par les compteurs 132 à un nombre inférieur ou à un nombre supérieur au précédent. Le maintien au nombre antérieur équivaut à retarder d'une unité la base de temps 13, tandis qu'un saut d'une unité correspond au fonctionnement normal, c'est-à-dire à une absence de correction.

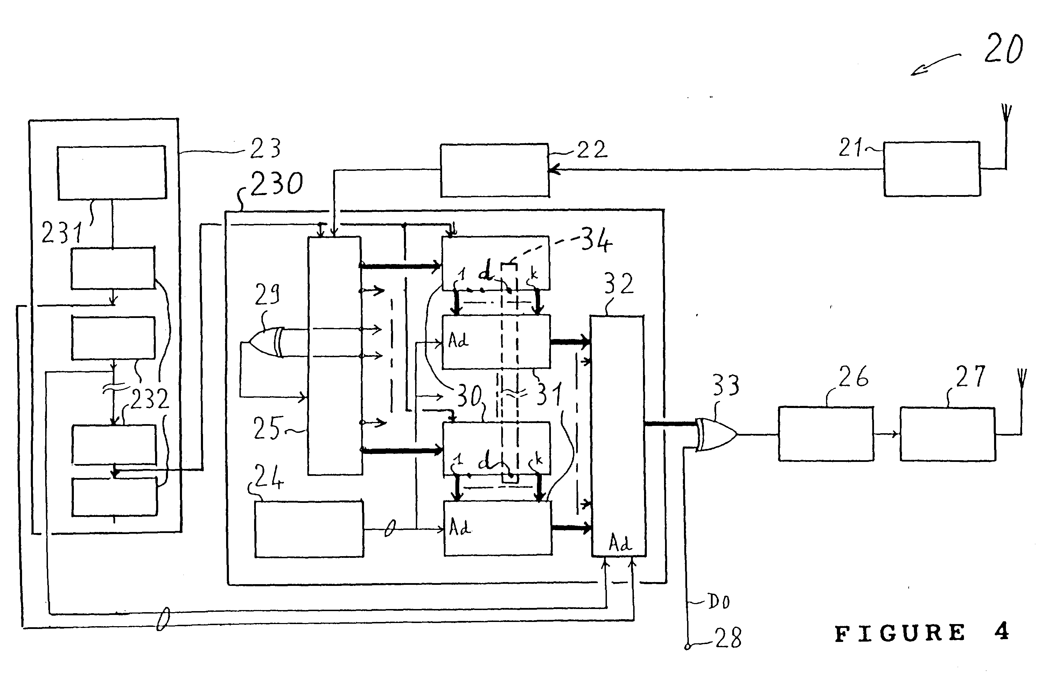

Sur la figure 3 sont représentées deux trames successives Ti, Ti+1 fournies par la base de temps 13. Pour la simplicité de l'exposé, chacune ne comporte que quatre intervalles de temps ITj (j = 1 à 4) respectivement affectés aux émetteurs 1 à 4, c'est-à-dire que les deux étages 132 représentés sont supposés être directement reliés en cascade.

Le circuit 12 comporte en mémoire la durée de la période, ou trame Ti, de la base de temps 13, afin de soustraire cette valeur à la valeur de forçage dès que celle-ci dépasse la taille de la trame, ou format, de la base de temps 13.

Le nombre issu de la base de temps 13, désignant successivement les divers ITj, est comparé au nombre d'identité du registre 14 et, en cas d'égalité, le comparateur 15 fournit un signal autorisant le fonctionnement du circuit 16. Ce dernier commande alors l'émission des données DO, provenant de la borne 18, par le circuit 17, avec un retard, par rapport à la base de temps 13 ou aux informations GPS, fonction du nombre d'identité, donc particulier à chaque émetteur 1 à 4.

Ainsi, les informations GPS diffusées, et reçues simultanément par les divers émetteurs 10, permettent à ceux-ci de se synchroniser entre eux, ici en décalant, ou retardant, leurs émissions de façon ordonnée en fonction de leur nombre d'identité, afin de réaliser implicitement une scrutation cyclique (polling).

Si l'on avait prévu d'exploiter des informations diffusées qui ne contiennent pas des informations de temps, c'est-à-dire dont ce serait seulement l'instant de réception qui fournirait en lui-même une information de synchronisation, le circuit 12 aurait alors comporté un circuit de reconnaissance de ces informations, commandant le forçage de la base de temps 13 dans un état prédéterminé, par exemple sa remise à zéro.

On comprendra en fait que seule la première synchronisation des émetteurs 1 à 4 est nécessaire, les resynchronisations ultérieures ne trouvant leur utilité que dans la mesure où l'oscillateur 131 de la base de temps 13 dérive de façon perceptible pour la synchronisation des divers émetteurs 1 à 4. De ce fait, le forçage de synchronisation de la base de temps 13 dans un état prédéterminé (zéro), et non dans un état défini par des informations de temps diffusées comme dans l'exemple détaillé précédent, correspond à une mise en service initiale, avec, éventuellement, des forçages ultérieurs qui tronquent la trame en cours mais qui sont susceptibles de n'intervenir que rarement, le circuit 12 inhibant par exemple les forçages de synchronisation trop rapprochés et donc inutiles.

Dans la seconde variante, de la figure 4, les émetteurs sont cette fois synchronisés, sans décalage entre eux, c'est-à-dire qu'en réception (6) leurs émissions respectives ne sont pas séparées et identifiées par une répartition de temps (polling implicite) mais sont superposées, et même ici permanentes, et sont identifiées par un mot de code propre à chacune.

En d'autres termes, le mot de code ne sert plus à effectuer une séparation temporelle. Les émetteurs émettent simultanément des mots de code qui représentent leurs signatures respectives, modulées par un bit de données émis par chacun, et le récepteur 6 identifie chacune de ces signatures dans le signal composite qu'il reçoit pour en déterminer la modulation de chacune, donc le bit de données correspondant.

L'émetteur 20 de la figure 4 comporte un récepteur radio 21 et un circuit de synchronisation 22 du même genre que les circuits respectifs 11 et 12. La base de temps 23 comporte un oscillateur 231 commandant l'avance de compteurs/diviseurs 232 dont quatre étages sont représentés. Un étage 232 aval, ici le troisième représenté, commande à relativement basse fréquence l'avance d'un générateur classique de nombres pseudo-aléatoires, représenté schématiquement par un registre à décalage 25 à sorties parallèles associées à des portes OU exclusif comme 29, de rebouclage de certaines combinaisons de sorties sur des étages déterminés du registre 25. Le circuit 22 commande la synchronisation du registre 25 comme le circuit 12 commandait celle des compteurs 132. Dans cet exemple, chacun des bits de sortie, fournissant globalement le nombre pseudo-aléatoire représentant l'état du registre 25, est mémorisé, à chaque période d'horloge du registre 25, dans un registre à décalage à sorties parallèles 30 de longueur k, k étant le nombre d'émetteurs du système, semblables à l'émetteur 20.

Pour la clarté du dessin, les faisceaux de liaisons parallèles sont représentés par une ligne en trait d'axe encadrée par les deux liaisons extrêmes. De même, le trajet des bits issus du registre 25 et aboutissant à une porte OU exclusif 33 de modulation apparaît sous forme de trait renforcé.

A chaque registre 30 est associé en sortie un multiplexeur 31 permettant de lire l'un des k bits, chacun de ceux-ci correspondant donc à un retard ou nombre de pas d de 1 à k périodes d'horloge du registre 25. Un registre 24, homologue du registre 14, fournit un nombre d'identité, ou mot de code d'identification, commandant l'adressage commun (Ad) des multiplexeurs 31, qui sont donc statiques. Un multiplexeur unique de sortie 32, commandé (Ad) par les étages amont (haute fréquence) des compteurs 232 de la base de temps 23, permet de lire successivement les bits du mot pseudo-aléatoire présentant le retard d déterminé par le nombre d'identification 24. Le cadre 34 en pointillés indique la position du nombre lu.

La sortie du multiplexeur 32 constitue une sortie de la base de temps auxiliaire, de codage, 230 que constituent les circuits 24, 25, 29 à 32, sortie appliquée à une entrée de la porte OU exclusif 33 recevant, sur son autre entrée, des données DO à émettre, appliquées à une borne 28. La sortie du OU exclusif 33 commande un circuit d'émission radio 27 à travers un circuit de mise en forme 26, du même genre que les circuits respectifs 17 et 16. Les ensembles 230 des divers émetteurs comme 20 servent donc à transformer un ensemble de mots d'identité (24) différents en un autre ensemble de mots ne présentant peu ou pas de corrélation entre eux, c'est-à-dire quasi-orthogonaux. L'intérêt de cette propriété est expliqué plus loin.

Le fonctionnement de l'émetteur 20 est le suivant.

Le registre 25 engendre cycliquement une séquence, ayant un nombre déterminé de pas, de nombres pseudo-aléatoires. Le circuit 22 assure la synchronisation du registre 25 avec les autres registres 25 des autres émetteurs comme 20 en fournissant une commande de forçage dans un état prédéterminé, commun à tous les émetteurs 20. Une confirmation cyclique peut aussi intervenir, comme dans l'exemple précédent.

Les circuits 24, 30, 31 constituent un circuit à retard réglable, permettant de choisir, pour une émission, un mot de code pseudo-aléatoire antérieur au contenu présent du registre 25, c'est-à-dire de rang correspondant à un retard d'un nombre d déterminé de périodes d'horloge du registre 25, retard spécifique à chaque émetteur comme 20.

Le mot de code issu du multiplexeur 32 est en outre, avant d'être émis, modifié ou modulé par un bit de données DO (28) à émettre, au moyen de la porte OU exclusif 33, qui inverse ou non le bit issu du multiplexeur 32 lorsque DO vaut 1 ou 0 (ou, exposé autrement, le mot de code module les données DO). Le bit de données DO est donc appliqué sur la borne 28 pendant toute la durée d'un cycle du multiplexeur 32 (ou période de l'horloge du registre 25) lisant successivement tous les bits du mot pseudo-aléatoire retardé 34. En d'autres termes, un bit de données DO à émettre est transcodé en une pluralité d'états élémentaires, ou moments de code, qui correspondent chacun à un bit du nombre pseudo-aléatoire 25 retardé.

On comprendra que, pour effectuer le décalage temporel ci-dessus du nombre pseudo-aléatoire émis par rapport à la référence de synchronisation fournie par le circuit 22, on aurait pu prévoir d'agir directement sur l'état du registre 25, en le forçant dans un état défini par le registre d'identité 24, par exemple par combinaison, par OU exclusif, entre une commande issue du circuit 22 et le nombre d'identité, définissant un état initial particulier à l'émetteur 20 considéré, les circuits 30, 31 étant alors inutiles.

Si l'on se place côté réception (6) de ces moments de code, les nombres pseudo-aléatoires émis simultanément, et ici en synchronisme parfait, sont tous différents puisqu'ils correspondent chacun à un retard d'un nombre de périodes ou pas d'horloge particulier à chaque émetteur comme 20 par rapport au début de la séquence, ou de l'état présent de référence (25), puisque l'on a ici choisi de continuer à faire avancer le générateur 25 même après fourniture des k premiers nombres, qui suffiraient en eux-mêmes. Chaque décalage ci-dessus dépendant du mot de code d'identification de l'émetteur comme 20 concerné, le récepteur 6 déduit l'identité de chaque émetteur 20 par mesure de ce décalage, en référence à un générateur local de nombres pseudo-aléatoires comme 25, 29.

Ces nombres ne présentent ainsi pas de corrélation sensible entre eux et, étant choisis de taille suffisante, ils constituent une signature, ici évolutive selon une séquence déterminée, de chaque émetteur comme 20 pouvant être identifiée en réception (6). Leur représentation, directe ou complémentée bit à bit, fournit la valeur 0 ou 1 de l'information de données DO qu'ils portent et qui les module.

La génération de codes pseudo-aléatoires ci-dessus, dits de Galois, présente l'intérêt de ne nécessiter la mémorisation (25) que d'un nombre limité de bits permettant cependant de fournir une séquence relativement longue de nombres quasi-orthogonaux, c'est-à-dire séparables par multiplication scalaire, moment de code à moment de code.

On peut cependant utiliser d'autres codes, comme les codes de Walsh-Hadamard, qui nécessitent de mémoriser et d'émettre des nombres beaucoup plus longs mais dont l'orthogonalité est parfaite.

On notera que la modulation de la signature ci-dessus par les données à émettre n'est pas limitée à une modulation par complémentation, ou inversion, des bits du mot représentant la signature. D'une façon générale, il suffit que les données modulent cette signature de façon à lui faire prendre une forme parmi plusieurs formes possibles connues correspondant chacune à une valeur spécifique des données. Chaque émetteur (20) a ainsi une pluralité de signatures correspondant à une même pluralité de valeurs de données, dans la mesure où chacune de ces signatures conserve son caractère de spécificité vis-à-vis de l'émetteur (20). Comme l'évoque l'utilisation du mot «pluralité», on peut prévoir d'émettre simultanément, dans une même signature, plusieurs valeurs de données, binaires ou autres.

Afin d'éviter, en réception (6), que certains signaux ne présentent un niveau excessif par rapport à d'autres et en faussent la détection, il peut être prévu que le récepteur 6 comporte des circuits de mesure de l'amplitude de la porteuse de chaque émetteur 1, 20, des circuits de comparaison des mesures et un circuit d'émission radio pour émettre, sur une voie dite balise par exemple, des télécommandes vers les récepteurs des divers émetteurs 1, 20. A réception d'une telle télécommande associée au mot d'identification d'un émetteur, celui-ci commande alors un amplificateur à gain réglable. L'ajustement de la puissance d'émission peut intervenir progressivement, par sauts déterminés de niveau et répétition éventuelle des télécommandes, ou il peut être défini par une information contenue dans la télécommande.

## Revendications

1. Système de communication à établissement d'appels sur un canal de transmission unique (5), comportant une pluralité d'émetteurs (1 à 4; 20) ayant des moyens d'émission respectifs (17; 27) agencés pour émettre dans le canal (5), caractérisé par le fait que les émetteurs (1-4; 20) comportent des moyens radio (11-15; 21-23; 230), de réception d'informations émises par des moyens de diffusion, agencés pour synchroniser sur celles-ci les moyens d'émission respectifs (17; 27).

2. Système selon la revendication 1, dans lequel les moyens radio de synchronisation sont agencés pour retarder (13-15), par rapport à l'instant de réception des informations, l'émission des moyens d'émission associés (17), selon un retard particulier à chaque émetteur.

3. Système selon la revendication 1, dans lequel chaque émetteur (20) comporte en outre des moyens (230, 33) de codage et de modulation de données élémentaires, à émettre, par un mot de code d'identification, les moyens radio de synchronisation des émetteurs (20) étant agencés pour synchroniser entre elles les émissions (27) de données élémentaires, provenant des moyens de modulation (33) des émetteurs (20).

4. Emetteur (1; 20) comportant des moyens d'émission agencés pour émettre dans le canal de transmission unique (5) d'un système de communication, caractérisé par le fait qu'il comporte des moyens radio (11-15; 21-23, 230), de réception d'informations émises par des moyens de diffusion (GPS), agencés pour synchroniser sur celles-ci les moyens d'émission (17, 27).

5. Emetteur selon la revendication 4, dans lequel les moyens radio (11, 12; 21, 22) sont agencés pour recevoir des informations de temps.

6. Emetteur selon la revendication 5, dans lequel les moyens radio (11, 12; 21, 22) sont agencés pour recevoir des informations de temps diffusées par le système GPS.

7. Emetteur selon l'une des revendications 4 à 6, dans lequel il est prévu un récepteur radio de commande de moyens de réglage de la puissance des moyens d'émission (17, 27).

8. Emetteur (1) selon l'une des revendications 4 à 7, dans lequel les moyens radio de synchronisation (11-15) sont agencés pour décaler, par rapport à un instant de réception des informations, l'émission des moyens d'émission (17) d'un retard déterminé (14).

9. Emetteur (20) selon l'une des revendications 4 à 7, dans lequel chaque émetteur comporte en outre des moyens de codage (230), pour fournir un mot de code d'identification, et des moyens (33) de modulation du mot de code.

10. Emetteur (20) selon la revendication 9, dans lequel les moyens de modulation (33) sont agencés pour effectuer la modulation du mot de code par une inversion de la représentation binaire de celui-ci en fonction de l'état de données binaires d'information.

11. Emetteur (20) selon l'une des revendications 9 et 10, dans lequel les moyens de codage (230) comportent des moyens (24, 25, 29 - 32) de génération cyclique d'une séquence, ayant un nombre déterminé de pas, de nombres pseudo-aléatoires, moyens (24, 25, 29 - 32) agencés pour être initialisés, par les moyens de synchronisation (21, 22), dans un état dans lequel le nombre pseudo-aléatoire présente, par rapport au début de la séquence, un décalage d'un nombre (d) de pas spécifique à l'émetteur.
